# EUROPÄISCHE PATENTSCHRIFT

(11) **EP 1 142 081 B1**
(45) Veröffentlichungstag und Bekanntmachung des Hinweises auf die Patenterteilung: **16.07.2008**
(21) Anmeldenummer: 99964564.1
(22) Anmeldetag: 14.12.1999
(51) Int. Cl.: H02K 1/14, H02K 21/18, H02K 37/16, H02K 1/18

(54) **MEHRPOLIGER ELEKTROMOTOR UND VERFAHREN ZU SEINER HERSTELLUNG**
MULTI-POLE ELECTRIC MOTOR AND METHOD OF PRODUCING THE SAME
MOTEUR ELECTRIQUE MULTIPOLAIRE ET PROCEDE PERMETTANT DE LE PRODUIRE

(30) Priorität: 23.12.1998 DE 19860111
(43) Veröffentlichungstag der Anmeldung: 10.10.2001
(73) Patentinhaber: Continental Automotive GmbH, 30165 Hannover (DE)
(72) Erfinder: BLUME, Heinrich-Jochen, D-64291 Darmstadt (DE); BECKHAUS, Christian, D-64297 Darmstadt (DE); EBERHARDT, Bernd, D-94807 Dieburg (DE); MITTENBUEHLER, Karl-Heinz, D-64347 Griesheim (DE)
(86) Internationale Anmeldenummer: PCT/EP1999/009885
(87) Internationale Veröffentlichungsnummer: WO 2000/039909

(56) Entgegenhaltungen:
- WO-A-90/11641
- DE-A- 3 630 559
- DE-B- 2 757 305
- US-A- 4 703 208
- US-A- 5 825 115
- PATENT ABSTRACTS OF JAPAN vol. 004, no. 141 (E-028), 4. Oktober 1980 (1980-10-04) & JP 55 092556 A (RHYTHM WATCH CO LTD), 14. Juli 1980 (1980-07-14)
- PATENT ABSTRACTS OF JAPAN vol. 004, no. 162 (E-033), 12. November 1980 (1980-11-12) & JP 55 109169 A (CITIZEN WATCH CO LTD), 22. August 1980 (1980-08-22)

## Beschreibung

Die Erfindung betrifft einen mehrpoligen Elektromotor mit einem Rotor und mit einem Stator, bestehend aus mehreren Spulen und Statorblechen, die magnetisch voneinander getrennt sind und sich jeweils von den Spulen zu dem Rotor erstrecken und ein Verfahren zu seiner Herstellung.

Aus der Praxis sind mehrpolige Elektromotoren mit mehreren Statorblechen und mit zwei oder mehreren Spulen als Stator und mit einem als Rotor ausgestalteten zylindrischen Permanentmagneten, der mindestens zwei Magnetpole aufweist, bekannt. Bei diesen Elektromotoren wird jeweils ein Statorblech von jedem Ende der Spule zu dem Rotor geführt, wo es dem Permanentmagneten in sehr geringem Abstand gegenübersteht. Bei der Herstellung der bekannten Elektromotoren werden die Statorbleche einzeln an den Enden der Spule befestigt und die Spulen anschließend in dem Gehäuse des Elektromotors montiert. Bei diesen bekannten Elektromotoren ist es nachteilig, dass die Positionierung der Statorbleche gegenüber dem Rotor sehr aufwendig ist, um Elektromotoren mit identischen elektrischen und mechanischen Eigenschaften herzustellen. Bei fehlerhaftem Abstand der Statorbleche untereinander oder zu dem Rotor kann das im negativsten Fall zu einem Blockieren des Rotors und damit Ausfall des Elektromotors kommen.

Weiterhin sind aus der DE 27 57 305 B Motoren bekannt, bei denen die Statorbleche in einem dem Rotor zugewandten Bereich mit einem Halter aus nicht magnetischem Metall verbunden sind.

Aus der US 5,825,115 A ist ein Elektromotor dieser Art besonders kompakt realisiert, bei dem zwei der gegenüberliegenden Statorbleche jeweils einmal derart gekröpft sind, dass zwischen ihren freien Enden eine der Spulen magnetisch mit den Statorblechen gekoppelt angeordnet ist, wobei die beiden anderen sich gegenüberliegenden Statorbleche in der Nähe der Öffnung eine erste und in der Nähe des freien Endes eine zweite Kröpfung derart aufweisen, dass zwischen den freien Enden die zweite Spule magnetisch mit den Statorblechen gekoppelt angeordnet ist. Insbesondere lässt sich dann einfach ein Getriebe dadurch realisieren, dass auf der Welle des Rotors ein Schneckentrieb angeordnet ist, der mit einem Stirnrad zusammenwirken kann.

Aufgabe dieser Erfindung ist es, einen Motor mit einem einfach zu befestigenden Stator anzugeben. Diese Aufgabe wird durch einen Motor mit den Merkmalen des Anspruchs 1 gelöst. Dadurch, dass der Halter einen Fuß zur mechanischen Fixierung des Stators am Einbauort des Stators aufweist, lässt sich der Stator insgesamt einfach befestigen.

Diese Befestigung gestaltet sich als besonders einfach, wenn der Halter zur Fixierung kröpfbar ist, beispielsweise nachdem der Fuß durch eine dafür vorgesehene Öffnung im Gehäuse des Elektromotors gesteckt ist.

Durch eine Verzinkung des Statorbleches wird die Korrosionsbeständigkeit des Elektromotors erhöht. Weiterhin lässt sich ein verzinktes Blech mit dem nichtmagnetischen Halter derart buckelverschweißen, dass einzelne Zinkatome und einzelne Atome des nichtmagnetischen Halters eine gemeinsame Struktur bilden und so die Statorbleche dauerhaft mit dem Halter verbunden sind, ohne dass die Eisenstruktur der Statorbleche verändert wird. Das Buckelschweißen hat weiterhin den Vorteil, dass eine stabile Verbindung bei kleinen Abmessungen hergestellt wird.

Das Buckelschweißen hat schließlich den Vorteil, dass der Arbeitsschritt nur kurze Zeit benötigt und das durch das Schweißen entstandene Werkstück umgehend weiterverarbeitet werden kann.

Es ist natürlich grundsätzlich auch ein Verkleben oder Löten der Statorbleche mit dem Halter möglich, doch ist die dafür benötigte Zeit größer als die für das Buckelschweißen benötigte Zeit.

Als nicht magnetisches Metall hat sich Messing als besonders gut verarbeitbar bei gleichzeitiger ausreichender Stabilität herausgestellt.

Durch eine Öffnung in einem Statorblech, in die ein Positionierdorn beispielsweise eines Gehäuses ragt, läßt sich der Stator einfach und sicher in dem Gehäuse oder auf einer Grundplatte positionieren, insbesondere in Kombination mit der zuletzt beschriebenen Ausgestaltung des Halters.

Die Statorbleche lassen sich besonders einfach von dem Steg oder den Stegen trennen, wenn diese durch Stanzen durchtrennt und/oder vollständig entfernt werden.

Durch Zentrieröffnungen in dem Halter und in dem Werkstück, das die Statorbleche und den verbindenden Steg bzw. die sie verbindenden Stege umfaßt, lassen sich die Statorbleche besonders einfach und genau auf dem Halter positionieren.

Die Erfindung wird nachfolgend anhand der Figuren für ein besonders bevorzugtes Ausführungsbeispiel näher erläutert. Es zeigen:
- Figur 1:: Eine Ansicht eines Werkstücks umfassend vier Statorbleche, die noch nicht gekröpft und noch über einen Steg miteinander verbunden sind.
- Figur 2:: Eine Ansicht eines Halters.
- Figur 3:: Eine Ansicht des Halters aus Figur 2 verbunden mit dem Werkstück aus Figur 1.
- Figur 4:: Eine Ansicht der Statorbleche und des Halters aus Figur 3 nach deren Stanzung und der Kröpfung der Statorbleche.
- Figur 5:: Eine perspektivische Rückansicht der Statorbleche und des Halters aus Figur 4.
- Figur 6:: Eine perspektivische Ansicht der Statorbleche und des Halters aus Figur 4 im zusammenwirken mit einem Rotor.
- Figur 7:: Die Ansicht und den teilweisen Schnitt durch einen Elektromotor, der die Bauteile aus Figur 6 aufweist.

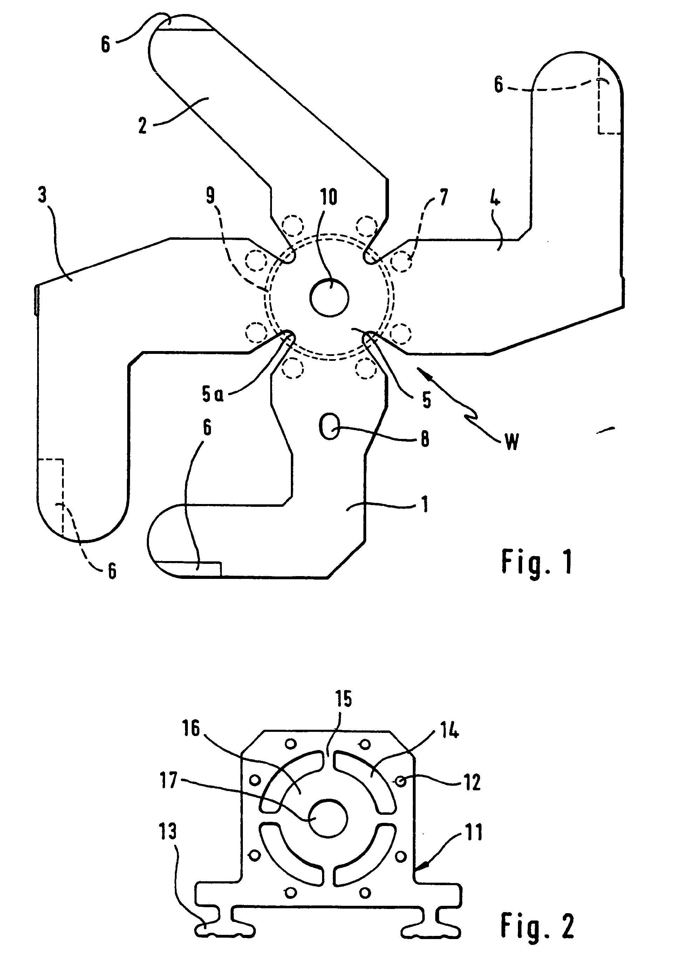

In Figur 1 weist eine Werkstück W die Statorbleche 1, 2, 3, 4 und einen Steg 5 auf, der die Statorbleche 1, 2, 3, 4 miteinander verbindet. Das Werkstück W ist beispielsweise aus verzinktem Stahlblech ausgestanzt. Die Statorbleche 1, 2, 3, 4 weisen jeweils eine Abflachung 6 zur einfachen Montage von zwischen jeweils zwei Statorblechen 1, 2, bzw. 3, 4 angeordneten, später beschriebenen Spulen auf. Bei jedem Statorblech 1, 2, 3, 4 sind die Positionen von jeweils zwei Schweißpunkten 7 zur Verbindung mit einem später zu beschreibenden Halter dargestellt. Das Statorblech 1 weist eine Öffnung 8 in Form eines Langlochs zur Aufnahme eines Positionierdorns auf, der beispielsweise in einem Gehäuse angeordnet sein kann.

Ein strichliert gezeichneter Doppelkreis 9 zeigt die Grenzbereiche zwischen dem Steg 5 und den Statorblechen 1, 2, 3, 4. Der Steg 5 weist weiterhin eine runde Zentrieröffnung 10 und vier Einbuchtungen 5a auf.

In Figur 2 weist ein Halter 11, der beispielsweise aus Messingblech gestanzt ist, acht runde buckelförmige Erhebungen 12, zwei Füße 13, vier radial gebogene Langlöcher 14, vier Stege 15, die die Langlöcher 14 unterbrechen, und ein Mittelstück 16 mit einer Zentrieröffnung 17 auf.

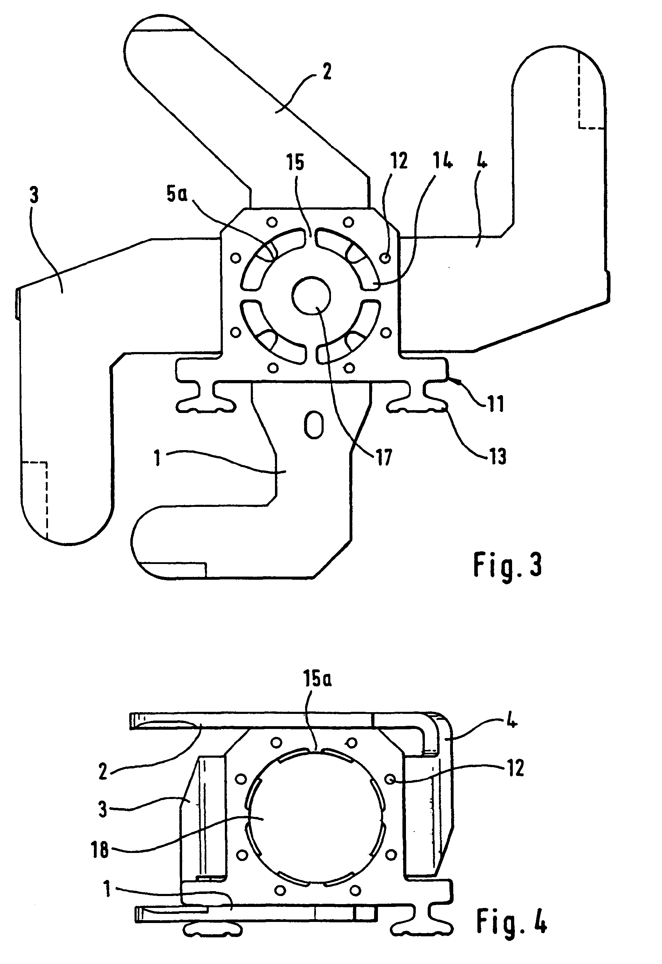

In Figur 3 ist der Halter 11 mit dem Werkstück W durch acht Buckelverschweißungen, die sich zwischen den buckelförmigen Erhebungen 12 und den darunterliegenden, in Figur 3 nicht sichtbaren Positionen der Schweißpunkte 7 der Statorbleche 1, 2, 3, 4 befinden, verbunden. Vor dem Verschweißen können der Halter 11 und das Werkstück W miteinander durch einen Dorn zentriert werden, der durch die Zentrieröffnung 17 des Halters 11 und die darunterliegende Zentrieröffnung 10 des Werkstücks W geführt wird. Je nach der Beschaffenheit des Dorns weisen die Durchmesser der Zentrieröffnungen 10, 17 gleiche Maße auf, wenn der Dorn zylindrisch ausgeführt ist, oder unterschiedliche Maße auf, wenn der Dorn kegelförmig ausgeführt ist. Die Zentrieröffnungen 10, 17 können auch mehreckig ausgestaltet sein.

Um die in Figur 4 dargestellte Öffnung 18 zur Aufnahme des später zu beschreibenden Rotors zu erhalten, sind von dem Werkstück W der Steg 5 und von dem Halter 11 das Mittelstück 16 mit den Stegen 15 entfernt worden. So sind die Statorbleche 1, 2, 3, 4 magnetisch voneinander getrennt. Die Entfernung des Steges 5, des Mittelstücks 16 und der Stege 15 läßt sich vorteilhafterweise durch ein Ausstanzen der zu entfernenden Teile ausführen, wobei die Zentrieröffnung 17 auch als Positionierhilfe für das für das Stanzen benötigte Werkzeug dienen kann. In Figur 4 erkennt man noch Stegstümpfe 15a der ansonsten entfernten Stege 15. Dadurch, daß beim Halter 11 nur die Stege 15 durchtrennt werden müssen und nicht der gesamte Umfang der Öffnung 18, werden der Halter 11 und die Schweißungen an de Statorblechen 1, 2, 3, 4 durch dieses Stanzen weniger belastet und der Halter 11 nicht verformt. Die Statorbleche 1, 2, 3, 4 sind in Figur 4 weiterhin bereits in ihre endgültige Stellung gebogen.

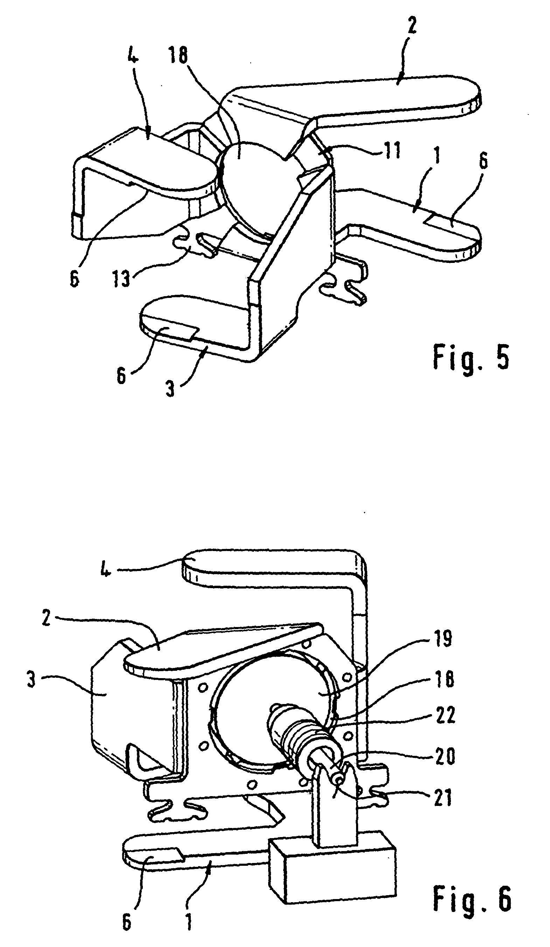

Die perspektivische Ansicht in Figur 5 zeigt die Rückansicht der in Figur 4 dargestellten Statorbleche 1, 2, 3, 4 mit dem Halter 11. Man erkennt, daß die am Halter 11 angeordneten Enden der Statorbleche 1, 2 und der Statorbleche 3, 4 sich jeweils gegenüberliegen und daß die Statorbleche 1, 2 jeweils einfach und die Statorbleche 3, 4 jeweils zweifach derart gekröpft sind, daß zwischen den Statorblechen 1, 2 bzw. 3, 4 jeweils eine nicht dargestellte Spule angeordnet werden kann, wobei die Abflachungen 6 der Statorbleche 1, 2, 3, 4 die Montage erleichtern.

Bei der perspektivischen Ansicht in Figur 6 erkennt man zusätzlich in der Öffnung 18 einen diametralmagnetisierten Rotor 19, der mittels einer Rotorwelle in zwei Lagern drehbar gelagert ist, von denen das Lager 21 dargestellt ist. Auf der Rotorwelle 20 ist ein Schneckentrieb 22 fest mit dem Rotor verbunden.

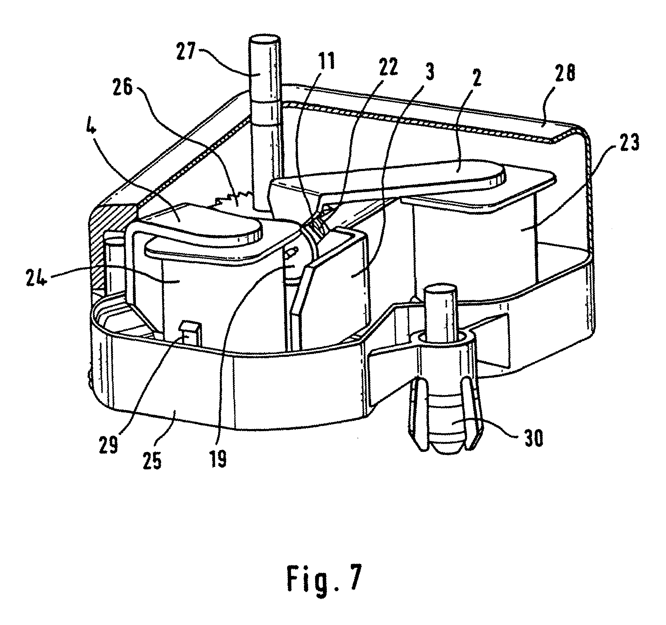

Bei der perspektivischen Ansicht mit Teilschnitt eines Ausführungsbeispiels eines vollständigen erfindungsgemäßen Elektromotors stimmt die Lage der Ansicht der Statorbleche 1, 2, 3, 4 und des Halters 11 in etwa mit der Lage der Ansicht dieser Teile in Figur 5 über ein. Zwischen den Enden des Statorblechs 2 und des nicht sichtbaren Statorblechs 1 ist eine Spule 23 angeordnet und mit diesen magnetisch gekoppelt. Ebenso ist eine Spule 24 zwischen den Enden der Statorbleche 4, 3 angeordnet, wobei in Figur 7 die Sicht auf das Ende des Statorblechs 3 durch ein Gehäuseunterteil 25 verdeckt wird. Der Motor ist beispielsweise durch Ansteuern der Spulen 23, 24 mit Stromimpulsen als Schrittmotor oder durch Ansteuern der Spulen 23, 24 mit um 90° versetzten sinusförmigen Strömen als Synchronmotor betreibbar.

Der Schneckentrieb 22 steht in Wirkverbindung mit einem Stirnrad 26, das mittels einer Welle 27 drehbar gelagert ist. Auf die Welle 27 ist beispielsweise ein weiteres Getriebeteil montierbar. Auch ist es möglich, auf die Welle 27 einen Anzeiger zu montieren und so ein Meßwerk zu realisieren, insbesondere bei einer Ansteuerung als Schrittmotor. Durch die Untersetzung der Motordrehschritte durch das Getriebe bestehend aus dem Schneckentrieb 22 und dem Stirnrad 26 läßt sich zusätzlich die Auflösung erhöhen. Der vorgeschriebene Motor läßt sich vor Umwelteinflüssen durch ein Gehäuseoberteil 28 schützen, das vorteilhafterweise mittels eines Clips 29 auf dem Gehäuseunterteil 25 befestigbar ist. Schließlich kann der vorbeschriebene Elektromotor mittels eines Rastelementes 30 beispielsweise auf einer nicht dargestellten Leiterplatte einfach, schnell und dauerhaft befestigt werden.

## Patentansprüche

1. Mehrpoliger Elektromotor mit einem Rotor und einem Stator bestehend aus mehreren Spulen und Statorblechen, wobei die Statorbleche (1, 2, 3, 4) einen Stator bilden, der zentrisch eine Öffnung (18) zur Aufnahme des Rotors (19) aufweist, wobei die einzelnen Statorbleche (1, 2, 3, 4) um die Öffnung (18) herum angeordnet sind, und wobei jeweils zwei diametral gegenüberliegende Statorbleche (1, 2, 3, 4) so zueinander gebogen sind, dass sie zwischen ihren Enden eine Spule (23, 24) aufnehmen, **dadurch gekennzeichnet, dass** die Statorbleche (1, 2, 3, 4) im Bereich der Öffnung (18) magnetisch voneinander getrennt sind und sich jeweils von den Spulen zu dem Rotor erstrecken, und die Statorbleche (1, 2, 3, 4) in einem dem Rotor (19) zugewandten Bereich mit einem Halter (11) aus nicht magnetischem Metall verbunden sind, und dass der Halter (11) mindestens einen Fuß (13) zur mechanischen Fixierung des Stators am Einbauort des Stators aufweist.

2. Elektromotor nach Anspruch 1, **dadurch gekennzeichnet, daß** die Statorbleche (1, 2, 3, 4) verzinkt sind.

3. Elektromotor nach Anspruch 2, **dadurch gekennzeichnet, daß** die Statorbleche (1, 2, 3, 4) mit dem Halter (11) aus nichtmagnetischen Metall verschweißt sind.

4. Elektromotor nach Anspruch 3, **dadurch gekennzeichnet, daß** die Statorbleche (1, 2, 3, 4) mit dem Halter (11) aus nichtmagnetischen Metall buckelverschweißt sind.

5. Elektromotor nach einem der vorstehenden Ansprüche, **dadurch gekennzeichnet, daß** das nichtmagnetische Metall Messing ist.

6. Elektromotor nach einem der Ansprüche 1 bis 4, **dadurch gekennzeichnet, daß** das nichtmagnetische Metall ein Buntmetall oder eine Buntmetallegierung ist.

7. Elektromotor nach Anspruch 1, **dadurch gekennzeichnet, dass** er vier Statorbleche (1, 2, 3, 4) und zwei Spulen (23, 24) aufweist.

8. Elektromotor nach Anspruch 7, **dadurch gekennzeichnet, dass** zwei gegenüberliegende Statorbleche (1, 2) einfach zueinander derart gekröpft sind, dass Teile der Statorbleche (1, 2) parallel zueinander ausgerichtet sind, zwischen denen die erste Spule (23) magnetisch gekoppelt angeordnet ist.

9. Elektromotor nach Anspruch 8, **dadurch gekennzeichnet, dass** die zwei anderen gegenüberliegenden Statorbleche (3, 4) in der Nähe der Öffnung (18) eine erste und in der Nähe der freien Enden eine zweite Kröpfung aufweisen und zwischen den freien Enden die zweite Spule (24) magnetisch gekoppelt angeordnet ist.

10. Elektromotor nach Anspruch 9, **dadurch gekennzeichnet, dass** die Spulen (23, 24) auf einer Höhe achsparallel angeordnet sind.

11. Elektromotor nach Anspruch 1, **dadurch gekennzeichnet, dass** der Fuß (13) nach Einbau des Stators zur Fixierung des Stators kröpfbar ist.

12. Elektromotor nach Anspruch 1 oder 11, **dadurch gekennzeichnet, dass** der Stator in einem Gehäuse fixierbar ist.

13. Elektromotor nach einem der vorstehenden Ansprüche, **da - durch gekennzeichnet**, **dass** ein Statorblech (1) eine Öffnung (8) aufweist, in die ein Positionierdorn ragt.

14. Elektromotor nach Anspruch 13, **dadurch gekennzeichnet, dass** der Positionierdorn in dem Gehäuse angeordnet ist.

15. Elektromotor nach einem der vorstehenden Ansprüche, **dadurch gekennzeichnet, dass** die Statorbleche (1, 2, 3, 4) an ihren den Spulen (23, 24) zugewandten Enden Abflachungen (6) zur vereinfachten Montage der Spulen (23, 24) aufweisen.

16. Elektromotor nach einem der vorstehenden Ansprüche, **dadurch gekennzeichnet, dass** der Rotor (19) mit einem Schneckentrieb (22) verbunden ist, der ein Stirnrad (26) antreibt.

## Claims

1. Multipole electric motor with a rotor and a stator, comprising a plurality of coils and stator laminations, the stator laminations (1, 2, 3, 4) forming a stator which centrally has an opening (18) for receiving the rotor (19), the individual stator laminations (1, 2, 3, 4) being arranged around the opening (18), and pairs of diametrically opposite stator laminations (1, 2, 3, 4) being bent in relation to one another in such a way that they receive a coil (23, 24) between their ends, **characterized in that** the stator laminations (1, 2, 3, 4) are magnetically separated from one another in the region of the opening 18 and respectively extend from the coils to the rotor, and the stator laminations (1, 2, 3, 4) are connected in a region facing the rotor (19) to a holder (11) of non-magnetic metal, and **in that** the holder (11) has at least one foot (13) for mechanically fixing the stator at the place where the stator is fitted.

2. Electric motor according to Claim 1, **characterized in that** the stator laminations (1, 2, 3, 4) are galvanized.

3. Electric motor according to Claim 2, **characterized in that** the stator laminations (1, 2, 3, 4) are welded to the holder (11) of non-magnetic metal.

4. Electric motor according to Claim 3, **characterized in that** the stator laminations (1, 2, 3, 4) are projection-welded to the holder (11) of non-magnetic metal.

5. Electric motor according to one of the preceding claims, **characterized in that** the non-magnetic metal is brass.

6. Electric motor according to one of Claims 1 to 4, **characterized in that** the non-magnetic metal is a non-ferrous metal or a non-ferrous metal alloy.

7. Electric motor according to Claim 1, **characterized in that** it has four stator laminations (1, 2, 3, 4) and two coils (23, 24).

8. Electric motor according to Claim 7, **characterized in that** two opposite stator laminations (1, 2) are cranked once in relation to each other in such a way that parts of the stator laminations (1, 2) are aligned parallel to each other, between which parts the first coil (23) is arranged in a magnetically coupled manner.

9. Electric motor according to Claim 8, **characterized in that** the two other opposite stator laminations (3, 4) have in the vicinity of the opening (18) a first crank and in the vicinity of the free ends a second crank and the second coil (24) is arranged in a magnetically coupled manner between the free ends.

10. Electric motor according to Claim 9, **characterized in that** the coils (23, 24) are arranged axially parallel at one height.

11. Electric motor according to Claim 1, **characterized in that** the foot (13) can be cranked after fitting of the stator for fixing the stator.

12. Electric motor according to Claim 1 or 11, **characterized in that** the stator can be fixed in a housing.

13. Electric motor according to one of the preceding claims, **characterized in that** one stator lamination (1) has an opening (8) into which a positioning pin protrudes.

14. Electric motor according to Claim 13, **characterized in that** the positioning pin is arranged in the housing.

15. Electric motor according to one of the preceding claims, **characterized in that** the stator laminations (1, 2, 3, 4) have at their ends facing the coils (23, 24) flattened portions (6) for facilitating fitting of the coils (23, 24).

16. Electric motor according to one of the preceding claims, **characterized in that** the rotor (19) is connected to a worm drive (22) which drives a spur gear (26).

## Revendications

1. Moteur électrique multipolaire comportant un rotor et un stator, lui-même composé de plusieurs bobines et de plusieurs tôles de stator, les tôles de stator (1, 2, 3, 4) formant un stator qui a, en son centre, une ouverture (18) destinée à accueillir le rotor (19), les différentes tôles de stator (1, 2, 3, 4) étant disposées autour de l'ouverture (18) et deux tôles de stator (1, 2, 3, 4) se faisant diamétralement face étant coudées l'une vers l'autre de manière telle qu'elles accueillent une bobine (23, 24) entre leurs extrémités, **caractérisé par le fait que** les tôles de stator (1, 2, 3, 4) sont, dans la zone de l'ouverture (18), séparées magnétiquement l'une de l'autre et s'étendent chacune depuis les bobines jusqu'au rotor, que les tôles de stator (1, 2, 3, 4) sont liées, dans une partie tournée vers le rotor (19), à un support (11) en métal non magnétique et que le support (11) comporte au moins un pied (13) destiné à la fixation mécanique du stator à l'endroit du montage du stator.

2. Moteur électrique selon la revendication 1, **caractérisé par le fait que** les tôles de stator (1, 2, 3, 4) sont galvanisées.

3. Moteur électrique selon la revendication 2, **caractérisé par le fait que** les tôles de stator (1, 2, 3, 4) sont soudées au support (11) en métal non magnétique.

4. Moteur électrique selon la revendication 3, **caractérisé par le fait que** les tôles de stator (1, 2, 3, 4) sont soudées par bossage au support (11) en métal non magnétique.

5. Moteur électrique selon l'une des revendications précédentes, **caractérisé par le fait que** le métal non magnétique est du laiton.

6. Moteur électrique selon l'une des revendications 1 à 4, **caractérisé par le fait que** le métal non magnétique est un métal non ferreux ou un alliage de métal non ferreux.

7. Moteur électrique selon la revendication 1, **caractérisé par le fait qu'**il comporte quatre tôles de stator (1, 2, 3, 4) et deux bobines (23, 24).

8. Moteur électrique selon la revendication 7, **caractérisé par le fait que** deux tôles de stator (1, 2) se faisant face sont simplement contrecoudées l'une par rapport à l'autre de manière telle que des parties des tôles de stator (1, 2) sont orientées parallèlement l'une par rapport à l'autre, parties entre lesquelles la première bobine (23) est montée en couplage magnétique.

9. Moteur électrique selon la revendication 8, **caractérisé par le fait que** les deux autres tôles de stator (3, 4) se faisant face ont, à proximité de l'ouverture (18), un premier coude et, à proximité des extrémités libres, un deuxième coude et que la deuxième bobine (24) est montée en couplage magnétique entre les extrémités libres.

10. Moteur électrique selon la revendication 9, **caractérisé par le fait que** les bobines (23, 24) sont disposées à une même hauteur, leurs axes étant parallèles.

11. Moteur électrique selon la revendication 1, **caractérisé par le fait que** le pied (13) peut, pour la fixation du stator, être coudé après l'installation du stator.

12. Moteur électrique selon la revendication 1 ou 11, **caractérisé par le fait que** le stator peut être fixé dans un boîtier.

13. Moteur électrique selon l'une des revendications précédentes, **caractérisé par le fait qu'**une tôle de stator (1) comporte une ouverture (8) dans laquelle fait saillie un tourillon de positionnement.

14. Moteur électrique selon la revendication 13, **caractérisé par le fait que** le tourillon de positionnement est placé dans le boîtier.

15. Moteur électrique selon l'une des revendications précédentes, **caractérisé par le fait que** les tôles de stator (1, 2, 3, 4) comportent, à leurs extrémités tournées vers les bobines (23, 24), des méplats (6) pour simplifier le montage des bobines (23, 24).

16. Moteur électrique selon l'une des revendications précédentes, **caractérisé par le fait que** le rotor (19) est lié à un mécanisme à vis sans fin (22) qui entraîne un pignon droit (26).
